# EUROPÄISCHE PATENTSCHRIFT

(11) **EP 2 526 655 B1**
(45) Veröffentlichungstag und Bekanntmachung des Hinweises auf die Patenterteilung: **15.11.2017**
(21) Anmeldenummer: 12702969.2
(22) Anmeldetag: 01.02.2012
(51) Int. Cl.: H04L 12/40, G07C 5/00

(54) **STEUERGERÄT UND ANORDNUNGEN MIT EINEM STEUERGERÄT**
CONTROL DEVICE AND SYSTEMS EQUIPPED WITH A CONTROL DEVICE
APPAREIL DE COMMANDE ET SYSTÈMES ÉQUIPÉS D'UN APPAREIL DE COMMANDE

(30) Priorität: 04.02.2011 DE 102011010400
(43) Veröffentlichungstag der Anmeldung: 28.11.2012
(73) Patentinhaber: Peiker acustic GmbH & Co. KG, 61381 Friedrichsdorf (DE)
(72) Erfinder: MÜLLER, Gerald, 35415 Pohlheim (DE); PEIKER, Andreas, 61381 Friedrichsdorf (DE); RICHTER, Lutz, P., 15299 Mixdorf (DE); SCHILLO, Christoph, 61381 Friedrichsdorf (DE); SCHULZE, Marcus, 61231 Bad Nauheim (DE)
(74) Vertreter: Otten, Roth, Dobler & Partner mbB Patentanwälte
(86) Internationale Anmeldenummer: PCT/EP2012/000431
(87) Internationale Veröffentlichungsnummer: WO 2012/104068

(56) Entgegenhaltungen:
- WO-A1-2010/000262
- US-A1- 2007 156 311
- US-A1- 2009 125 178
- MELENDEZ W A ET AL: "The upper layers of the ISO/OSI reference model (part II)", COMPUTER STANDARDS AND INTERFACES, ELSEVIER SEQUOIA. LAUSANNE, CH, Bd. 5, Nr. 2, 1. Januar 1986 (1986-01-01), Seiten 65-77, XP026649767, ISSN: 0920-5489, DOI: 10.1016/0920-5489(86)90072-3 [gefunden am 1986-01-01]

## Beschreibung

Die Erfindung betrifft ein Hybridgerät gemäß dem Oberbegriff des Anspruchs 1.

Aus der DE 103 10 115 A1 ist eine Anordnung zur Fernbedienung eines mobilen Funktelefons in einem Kraftfahrzeug bekannt. Diese Anordnung umfasst ein eigenständiges Schnittstellenmodul, welches als Ausgabeeinheit auch eine standardisierte Schnittstelle zu einem CAN-Bus herstellt, wobei das Schnittstellenmodul auch eine Kommunikationsmanagementeinheit umfasst, in welcher eine Konvertierung der Datenformate zwischen dem Funktelefon und der Ausgabeeinheit erfolgt. Nachteilig an dieser Anordnung ist, dass die Kommunikationsmanagementeinheit über die gerätespezifischen Befehlssätze zur Datenübertragung verfügen muss, damit diese die Umwandlung der Datenformate zwischen dem Funktelefon und der Ein- und Ausgabeeinheit vornehmen kann. Bei einer Anordnung entsprechend dem Stand der Technik wird mittels des Schnittstellenmoduls unter Aufwendung von Rechenleistung zwischen der Sprache des Fahrzeugsbusses und der Sprache des mobilen Funktelefons übersetzt.

Aus der US 2007/0156311 A1 ist ein Kommunikationsmodul bekannt, welches ein Gehäuse, einen Modulstecker zum Einstecken in eine Diagnoseschnittstelle des Fahrzeug-Diagnosesystems und einen Sende-Empfänger umfasst, welcher dazu ausgelegt ist, mit einem Mobiltelefon zu kommunizieren, welches drahtlosen Zugang zu einem Datennetzwerk aufweist.

Aus der WO 2010/000262 A1 ist ein System zur Analyse von Daten eines Fahrzeugbordcomputers bekannt, wobei das System einen Adapter, ein Kommunikationsmittel und ein Serversystem für das Internet umfasst.

Die Publikation XP 26649767 A beschreibt die Anforderungen und die Vorzüge einer offenen Kommunikation und definiert die grundlegenden Anforderungen für die Verbindung von verteilten Computersystemen.

Die US 2009/0125178 A1 bezieht sich auf die Verwendung eines Mobiltelefons zur Extraktion von fahrzeugbezogenen Daten aus einer Kontrolleinheit eines Fahrzeugmotors und auf die Übersetzung dieser Daten in eine vom Menschen lesbare Form auf dem Display des Mobiltelefons, wobei die Daten gleichzeitig über ein internetbasiertes System zur sofortigen Reparatur und zur Pannenhilfe übermittelt werden.

Aus heutiger Sicht muss ein fest in ein Fahrzeug installiertes Steuergerät, das als Gateway-Einheit bzw. Interface-Einheit ausgebildet ist, über die gesamte Lebensdauer des Fahrzeugs fahrzeugbezogene Applikationen auf einem elektronischen Gerät, insbesondere einem Mobiltelefon, unterstützten, wobei einkalkuliert werden muss, dass neue und komplexere Applikationen durchaus die Rechenleistung und Hardware-Ausprägung des im Fahrzeug fest verbauten Steuergeräts überfordern können.

Aufgabe der Erfindung ist es, ein Hybridgerät vorzuschlagen, welches eine Einbindung bzw. Anbindung des elektronischen Geräts in bzw. an einen Fahrzeugbus vereinfacht und in ihrer Leistungsfähigkeit steigert.

Weiterhin ist es insbesondere Aufgabe der Erfindung, ein Hybridgerät, welches aufwärtskompatibel ist, ohne dass bei einem Wechsel des elektronischen Geräts an einem im Fahrzeug verbauten Steuergerät eine Aktualisierung erforderlich ist. Weiterhin ist es Aufgabe der Erfindung den Rechenaufwand in einem Steuergerät zu minimieren, welcher beim Betrieb eines elektronischen Geräts an einem Fahrzeugbus erforderlich ist.

Diese Aufgabe wird ausgehend von den Merkmalen des Oberbegriffs des Anspruchs 1 durch die kennzeichnenden Merkmale des Anspruchs 1. In den Unteransprüchen sind vorteilhafte und zweckmäßige Weiterbildungen angegeben.

Kern der Erfindung ist eine Verlagerung eines Teils der Funktionalität eines Steuergeräts in ein weiteres, elektronisches Gerät, welches die Applikation trägt. Kern der Erfindung ist somit eine Verlagerung eines Teils der Funktionen bzw. Layer des Steuergeräts in das elektronische Gerät, welches insbesondere als Mobiltelefon ausgebildet ist, wobei die Realisierung eines Teils der originären Steuergerät-Funktionen softwaretechnisch im Rahmen einer auf einer Hardware des elektronischen Geräts installierbaren Applikation erfolgt. Mit anderen Worten wird das Steuergerät als Schnittstelle zwischen einer Applikation auf dem elektronischen Gerät und dem Fahrzeugbus durch eine Reduzierung der Aufgaben der Schnittstelle auf eine reine Vermittlungs- und Transportfunktion entlastet. Hierzu sind wesentliche Funktionsbestandteile bzw. die Applikationsbezogenen Schichten einer Bus-Implementierung z.B. einer CAN-Bus-Implementierung nicht im Steuergerät ausgeführt, sondern sind in die Applikation verlagert, welche von dem elektronischen Gerät getragen wird. Hierdurch wird ein Teil der Rechenleistung, welche an sich im Steuergerät erbracht wird, in das elektronische Gerät verlagert. Dies ist insbesondere deshalb vorteilhaft, weil ein moderneres elektronisches Gerät, welches gegen ein älteres elektronisches Gerät ausgetauscht wird, in der Regel leistungsfähiger ist, und damit die ggf. höheren Anforderungen an die Rechenleistung kompensieren kann und so das Steuergerät trotz höherer Anforderung ohne Nachteile weiter verwendet werden kann. Der Data-Link-Layer ist auf das Steuergerät und das elektronische Gerät aufgeteilt und bildet die Basis der Verbindung zwischen beiden Implementierungen. Hierbei ist es insbesondere vorteilhaft, dass bei der Verwendung unterschiedlicher, eventuell modernisierter elektronischer Geräte kein hardwareseitiges Update eines in dem Fahrzeug verbauten Steuergeräts erfolgen muss. Vielmehr ist die Installation einer geeigneten Applikation auf der Hardware des elektronischen Geräts ausreichend. Damit ist eine volle Aufwärtskompatibilität im Hinblick auf das verwendete elektronische Gerät gewährleistet.

Weiterhin ist es Kern der Erfindung, eine direkte Kommunikation zwischen dem elektronischen Gerät und dem Steuergerät herzustellen, welche in einer Sprache des angeschlossenen Fahrzeugbusses bzw. in einem für den Data-Link-Layer festgelegten Protokoll erfolgt, so dass in den beteiligten Geräten keine oder nur eine geringfügige Übersetzung der empfangenen bzw. gesendeten Datenpakete erforderlich ist. Somit werden die Datenpakete zwischen den beiden Geräten ohne eine aufwendige Protokollumsetzung ausgetauscht. Hierdurch wird Rechenleistung eingespart, die ansonsten von dem Steuergerät erbracht werden müsste.

Im Sinne der Erfindung wird unter einem Steuergerät eine Gateway-Einheit bzw. Interface-Einheit verstanden, wobei eine Gateway-Einheit im Sinne der Erfindung ein elektronisches Gerät ist, das die Anbindung eines elektronischen Geräts an einen Fahrzeugbus ermöglicht und wobei eine Interface-Einheit im Sinne der Erfindung ein elektronisches Gerät ist, das als Schnittstelle eine Kommunikation zwischen dem Fahrzeugbus und dem elektronischen Gerät ermöglich, wobei das elektronische Gerät insbesondere als mobiles elektronisches Gerät und insbesondere als Mobiltelefon ausgebildet ist.

Im Sinne der Erfindung werden die Schichten eines Schichtenmodells, welches beispielsweise sieben als Layer bezeichnete Schichten aufweist, mit den unten genannten Fachbegriffen bezeichnet.
Die 7. Schicht wird als Application-Layer oder Anwendungsschicht bezeichnet. Die 7. bzw. oberste Schicht ist durch die Anwendung selbst definiert und beinhaltet die eigentliche Applikationssoftware.
Die 6. Schicht wird als Presentation-Layer oder Darstellungsschicht bezeichnet. Die Darstellungsschicht ist für die Datenkonvertierung und für die Verschlüsselung der Daten verantwortlich.
Die 5. Schicht wird als Session-Layer oder Sitzungs- bzw. Kommunikationsschicht bezeichnet. Die Steuerungsschicht ist für die Datenflusssteuerung und für die Dialogkontrolle zuständig.
Die 4. Schicht wird als Transport-Layer oder Transportschicht bezeichnet. Die Transportschicht ist für die Übertragung der Datenpakete zuständig.
Die 3. Schicht wird als Network-Layer oder Netzwerk- bzw. Vermittlungsschicht bezeichnet. Der Network-Layer bzw. die Vermittlungsschicht ist für den Verbindungsaufbau zuständig. Dazu gehört auch das Routing, die Festlegung des Datenweges.
Die 2. Schicht wird als Data-Link-Layer oder Sicherungsschicht bezeichnet. Diese Ebene regelt den Zugang zur physikalischen Ebene.
Die 1. Schicht wird als Physical-Layer oder Bitübertragungsschicht bezeichnet. Die physikalische Ebene beschreibt die physikalische, hardwaretechnische Ebene des Steuergerätes.

Weitere Einzelheiten der Erfindung werden in der Zeichnung anhand von schematisch dargestellten Ausführungsbeispielen beschrieben.

Hierbei zeigt:
- Fig. 1: eine schematische Ansicht einer erfindungsgemäßen Anordnung mit Steuergerät und elektronischem Gerät
und
- Fig. 2: eine Ausführungsvariante zu der in der Figur 1 gezeigten Anordnung.

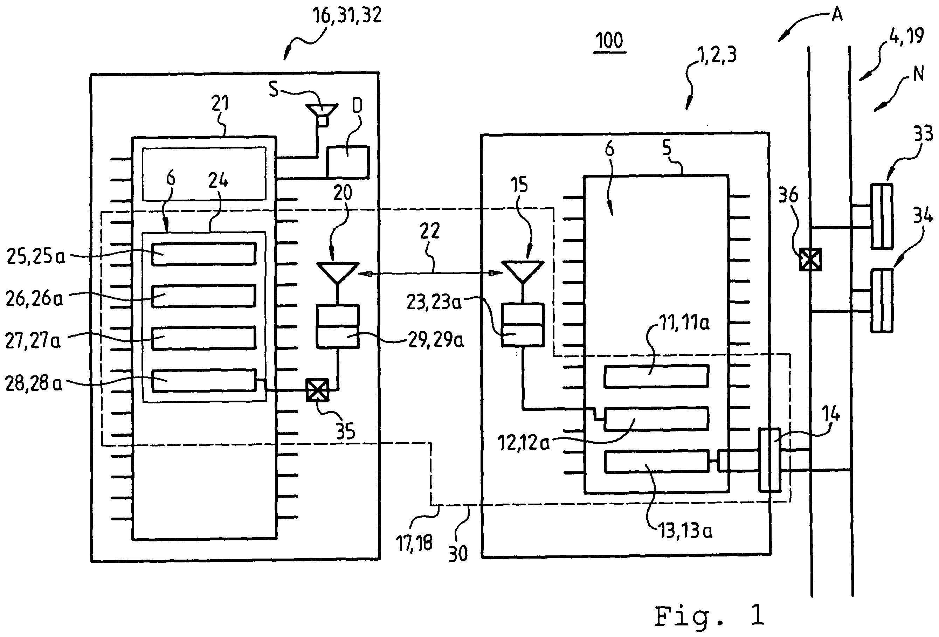

In der Figur 1 ist eine in einem Fahrzeug 100 angeordnete Anordnung A gezeigt, welche ein Steuergerät 1, ein elektronisches Gerät 16, einen Fahrzeugbus 4 und weitere Busteilnehmer 33 und 34 umfasst. In der Figur 1 ist weiterhin ein Hybridgerät 17 gezeigt, welches das an den Fahrzeugbus 4 angeschlossene Steuergerät 1 und das elektronische Gerät 16 umfasst, wobei das elektronische Gerät 16 als mobiles elektronisches Gerät 31 und insbesondere als mobiles elektronische Kommunikationsgerät 32 z.B. Mobiltelefon ausgebildet ist. Wenn die beiden Geräte 1 und 16 über eine bidirektionale Kommunikationsverbindung 22 verbunden sind, bilden diese ein körperlich aus zwei Geräten bestehendes zweiteiliges Steuergerät 30, welches auch als zweiteiliges adhoc-Steuergerät bezeichnet wird, da hier zwei Endgeräte bei Bedarf drahtlos zusammenarbeiten. Hierbei arbeitet dasselbe Steuergerät 1, welches als Fahrzeugsteuergerät 2 und insbesondere als CAN-BUS-Steuergerät 3 ausgebildet ist, mit dem dargestellten elektronischen Gerät 16 oder mit einem anderen, nicht dargestellten elektronischen Gerät zusammen und bildet mit dem jeweiligen elektronischen Gerät jeweils ein Hybrid-Fahrzeugsteuergerät 18, welches als hybrides adhoc-Steuergerät ausgeführt ist. Hierbei ist auf jedem der für die Zusammenarbeit geeigneten elektronischen Geräte eine Applikation 24 installiert, durch welche die zur Komplettierung des körperlich vorhandenen Steuergeräts 1 erforderlichen oberen Layer 25, 26, 27, 28 eines verwendeten Schichtenmodells 6 implementiert sind. Bei den oberen Layern 24 - 28 handelt es sich um den Application-Layer 25a, den Presentation-Layer 26a, den Session-Layer 27a und den Transport-Layer 28a. Die Applikation 24 ist jeweils insbesondere auf das Fahrzeug 100 und/oder insbesondere auf das Steuergerät 1 und/oder insbesondere auf das elektronische Gerät, 16 angepasst. Die Applikation 24 ist als Softwareprogramm bzw. so genanntes App zumindest für eine bestimmte Anordnung aus einem bestimmten elektronischen Gerät, einem bestimmten Steuergerät und einem bestimmten Fahrzeug vorgesehen. Somit ist es mit der erfindungsgemäßen Anordnung durch die Wahl der passenden Applikation möglich, mit jedem applikationsfähigen elektronischen Gerät über das im Fahrzeug angeordnete Steuergerät den Fahrzeugbus zur bidirektionalen Kommunikation mit anderen Busteilnehmern zu nutzen, ohne dass im Fahrzeug bzw. an dem Steuergerät 1 irgendwelche Veränderungen oder Aktualisierungen vorgenommen werden müssen. Durch die Installation der Applikation 24 auf einer frei programmierbaren Hardware 21 des elektronischen Geräts 16 werden dort die oberen Layer 25 - 28 des verwendeten Schichtenmodells 6 implementiert. Hierdurch obliegt der wesentliche Rechenaufwand für das Erstellen von Datenpakten 35, die an den Fahrzeugbus 4 gerichtet sind, dem elektronischen Gerät 16. Die in dem elektronischen Gerät 16 erzeugten Datenpakete 35 werden aus der Applikation 24 heraus und insbesondere aus dem Transport-Layer 28a heraus über die bidirektionale Kommunikationsverbindung 22 an das Steuergerät 1 übermittelt. Die Übermittlung erfolgt drahtlos über eine Schnittstelle 20 des elektronischen Geräts 16 an eine Schnittstelle 15 des Steuergeräts 1. Die Schnittstellen 20 und 15 sind jeweils als Bluetooth-Sende-Empfänger ausgebildet und weisen als Layer 29 bzw. 23 jeweils einen Data-Link-Layer 29a bzw. 23a auf. Gemäß einer nicht dargestellten Ausführungsvariante ist es auch vorgesehen, die Datenpakete 35 ohne Verwendung eines speziellen Bluetooth-Protokolls zu übermitteln. Das Steuergerät 1 umfasst eine Hardware 5, auf welcher drei Layer 11, 12 und 13 des verwendeten Schichtenmodells 13 implementiert sind. Bei den Layern 11 - 13 handelt es sich um einen Network-Layer 11a, einen Data-Link-Layer 12a und einen Physical-Layer 13a. Somit weisen das elektronische Gerät 16 und das Steuergerät 1 zusammen alle sieben Schichten des verwendeten Schichtenmodells 6 auf. Die Schnittstelle 15, von welcher die von dem elektronischen Gerät 16 ausgesendeten Datenpakete 35 empfangen werden, ist an den Data-Link-Layer 12a des Steuergeräts 1 angeschlossen. Die ankommenden Datenpakte 35 werden mit Hilfe des Network-Layers 11a an Busteilnehmer 33, 34 adressiert und vom Physical-Layer 13a auf den Fahrzeugbus 4, welcher als CAN-BUS 19 ausgeführt ist, gesetzt. Der Fahrzeugbus 4 bzw. der CAN-BUS 19 bildet ein Netzwerk N, über welches die Busteilnehmer 33, 34 und das Steuergerät 1, das ebenfalls als Busteilnehmer zu verstehen ist, verbunden sind. Hierzu ist der Physical-Layer 13a mit einer weiteren Schnittstelle 14 verbunden, über welche das Steuergerät 1 an den Fahrzeugbus 4 angeschlossen ist. Umgekehrt werden Datenpakte 36, welche von einem der Busteilnehmer 33, 34 an das Steuergerät 1 adressiert sind, über die Schnittstelle 14 des Steuergeräts 1 in den Physical-Layer 13a geleitet und vom Steuergerät 1 dann, ohne dass im Steuergerät 1 alle Layer des verwendeten Schichtenmodells 6 durchlaufen werden, über den Data-Link-Layer 12a an die Schnittstelle 15 des Steuergeräts 1 geleitet. Von dieser Bluetooth-Schnittstelle 15 erfolgt dann eine drahtlose Übertragung der Datenpakete 36 an die Bluetooth-Schnittstelle 20 des elektronischen Geräts 16. Diese leitet die Datenpakte 36 dann an die in der Hardware 21 des elektronischen Geräts 16 implementierten oberen Layer 25 - 28 des verwendeten Schichtenmodells 6. Hier werden die Datenpakte 36 dann entpackt und z.B. optisch und/oder akustisch an ein Display D und/oder einen Lautsprecher S ausgegeben. Die in dem elektronischen Gerät 16 implementierten Layer 25 - 28 und die in dem rudimentären Steuergerät 1 implementierten Layer 11 - 14 bilden zusammen alle Layer des verwendeten Schichtenmodells 6 und somit den Kern des aus zwei körperlich getrennten bzw. trennbaren und eigenständig funktionierenden Geräten 1, 16 gebildeten Hybrid-Fahrzeugsteuergerät 18.

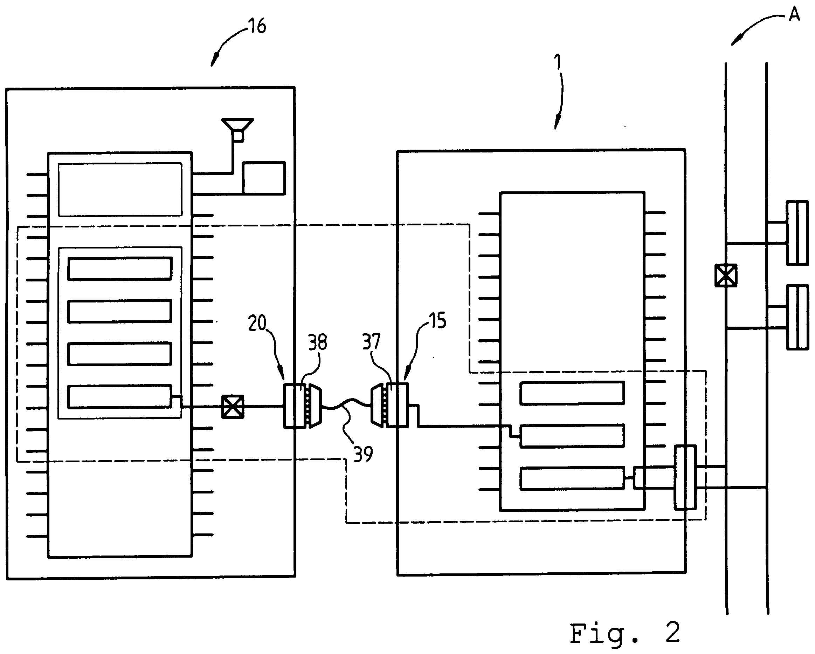

In der Figur 2 ist die in der Figur 1 gezeigte Anordnung A nochmals dargestellt. Insofern wird auf die Beschreibung zu der Figur 1 verwiesen. Im Unterschied zu der Figur 1 sind die Schnittstelle 15 des Steuergeräts 1 und die Schnittstelle 20 des elektronischen Geräts 20 nicht als Bluetooth-Sende-Empfänger ausgebildet, sondern jeweils durch einen mechanischen Stecker 37 bzw. 38 realisiert. Erfindungsgemäß ist es vorgesehen, die beiden Geräte 1, 16 mit einem Datenkabel 39 zu verbinden und so zwischen den beiden Geräten eine bidirektionale Kommunikation herzustellen. Die Erfindung sieht insbesondere vor, die Stecker 37, 38 als USB-Stecker und das Datenkabel 39 als USB-Datenkabel auszubilden. Gemäß einer nicht dargestellten Ausführungsvariante ist es auch vorgesehen, die beiden Geräte unter Vermeidung der Verwendung eines Datenkabels über die beiden Stecker direkt miteinander zu verbinden.

Die Erfindung ist nicht auf dargestellte oder beschriebene Ausführungsbeispiele beschränkt. Sie umfasst vielmehr Weiterbildungen der Erfindung im Rahmen der Schutzrechtsansprüche.

### Bezugzeichenliste:

- 1: Steuergerät
- 2: Fahrzeugsteuergerät
- 3: CAN-BUS-Steuergerät
- 4: Fahrzeugbus
- 5: Hardware von 1
- 6: Schichtenmodell
- 7 - 10: nicht belegt
- 11 - 13: Layer von 6 in 1
- 11a: Network-Layer
- 12a: Data-Link-Layer
- 13: unterster Layer von 6
- 13a: Physical-Layer
- 14: erste Schnittstelle von 1
- 15: zweite Schnittstelle von 1
- 16: elektronisches Gerät
- 17: Hybridgerät
- 18: Hybrid-Fahrzeugsteuergerät
- 19: CAN-BUS
- 20: dritte Schnittstelle von 16
- 21: frei programmierbare, zweite Hardware von 16
- 22: bidirektionale Kommunikationsverbindung zwischen 1 und 16
- 23: Layer von 15 in 16
- 23a: Data-Link-Layer
- 24: erste Applikation für 21
- 25 - 28: obere Layer von 6
- 25a: Application-Layer
- 26a: Presentation-Layer
- 27a: Session-Layer
- 28a: Transport-Layer
- 29: Layer von 20
- 29a: Data-Link-Layer
- 30: zweiteiliges Steuergerät
- 31: mobiles elektronisches Gerät
- 32: mobiles elektronisches Kommunikationsgerät
- 33, 34: Busteilnehmer
- 35: Datenpaket von 16 für 4
- 36: Datenpaket von 33 oder 34 für 1
- 37: Stecker an 1
- 38: Stecker an 16
- 39: Datenkabel

- 100: Fahrzeug
- A: Anordnung
- D: Display von 16
- N: Netzwerk
- S: Lautsprecher

## Patentansprüche

1. Hybrid-Fahrzeugsteuergerät (18) zum Anschluss an einen Fahrzeugbus (4), wie zum Beispiel CAN-BUS (19), FlexRay-BUS oder byteflight-BUS, **dadurch gekennzeichnet, dass**
- das Hybridgerät (17) ein Steuergerät (1; 3) und ein elektronisches Gerät (16) umfasst,
- wobei das Steuergerät (1) und das elektronische Gerät (16) in einer bidirektionalen Kommunikationsverbindung (22) stehen,
- wobei das Steuergerät (1) an den Fahrzeugbus (4) angeschlossen ist,
- wobei das Steuergerät (1) ein Gateway für eine auf dem elektronischen Gerät (16) laufende, fahrzeugbezogene Applikation bildet,
- dass ein Teil der Funktionalität des Steuergeräts (1; 3) in das weitere, elektronisches Gerät (16), welches eine Applikation trägt, verlagert ist,
- wobei das elektronische Gerät (16), als Mobiltelefon ausgebildet ist,
- wobei die Realisierung eines Teils der originären Steuergerät-Funktionen softwaretechnisch im Rahmen der auf einer Hardware des elektronischen Geräts (16) als Software installierbaren Applikation erfolgt,
- wobei auf einer ersten Hardware (5) des Steuergeräts (1; 3) untere Layer (11 - 13) eines Schichtenmodells (6) implementiert sind,
- wobei die Implementierung einen Physical-Layer (13a), einen Data-Link-Layer (12a) und einen Network-Layer (11a) des Schichtenmodells (6) umfasst, wobei der Data-Link-Layer (12a) den Zugang zur physikalischen Ebene regelt und wobei der Network-Layer (11a) für den Verbindungsaufbau zuständig ist,
- wobei das elektronische Gerät (16) eine zweite Hardware (21) umfasst,
- wobei auf der frei programmierbaren Hardware (21) des elektronischen Geräts (16) die auf das elektronische Gerät (16) und auf das Steuergerät (1; 3) abgestimmte erste Applikation (24) installiert ist, durch welche obere Layer (25 - 28) des Schichtenmodells (6) implementiert sind,
- wobei in dem Hybridgerät (17) durch die mit der Kommunikationsverbindung (22) realisierte Verbindung der oberen Layer (25 - 28) des elektronischen Geräts (16) mit den unteren Layern (11 - 13; 11a - 13a) des Steuergeräts (1; 3) ein zweiteiliges Steuergerät (30), insbesondere ein zweiteiliges adhoc-Steuergerät gebildet ist,
- wobei das Steuergerät (1; 3) eine erste Schnittstelle (14) und eine zweite Schnittstelle (15) umfasst,
- wobei das Steuergerät (1; 3) über die erste Schnittstelle (14) an den Fahrzeugbus (4) angeschlossen ist,
- wobei das elektronische Gerät (16) eine dritte Schnittstelle (20) umfasst,
- wobei unter Verwendung der zweiten und der dritten Schnittstelle (15, 20) die bidirektionale Kommunikationsverbindung (22) zwischen dem Steuergerät (1; 3) und dem elektronischen Gerät (16) besteht,
- wobei die zweite Schnittstelle (15) des Steuergeräts (1; 3) insbesondere mit einem eigenen Layer 23, insbesondere einem Data-Link-Layer (23a) in direkter bidirektionaler Kommunikationsverbindung mit dem auf der ersten Hardware (5) des Steuergeräts (1; 3) implementierten Data-Link-Layer (12a) steht,
- wobei auf der Hardware des elektronischen Geräts (16) durch die Applikation (24) insbesondere ein Application-Layer (25a), ein Presentation-Layer (26a), ein Session-Layer (27a) und ein Transport-Layer (28a) implementiert ist und
- wobei die dritte Schnittstelle (20) des elektronischen Geräts (16) insbesondere mit einem eigenen Layer (29), insbesondere einem Data-Link-Layer (29a) in direkter bidirektionaler Kommunikationsverbindung mit einem der dem auf der zweiten Hardware (21) des elektronischen Geräts (16) implementierten Layer (25 - 28), insbesondere dem Transport-Layer (28a), steht,
**dadurch gekennzeichnet,**
- **dass** eine direkte Kommunikation zwischen dem elektronischen Gerät (16) und dem Steuergerät (1) hergestellt ist, welche in einer Sprache des angeschlossenen Fahrzeugbusses erfolgt, so dass in den beteiligten Geräten (1; 16) keine Übersetzung der empfangenen bzw. gesendeten Datenpakete erforderlich ist.

2. Hybridgerät nach Anspruch 1, **dadurch gekennzeichnet, dass** das elektronische Gerät (16) als mobiles elektronisches Gerät (31) und insbesondere als mobiles elektronisches Kommunikationsgerät (32).

3. Hybridgerät (17) nach einem der Ansprüche 1 oder 2, **dadurch gekennzeichnet, dass** die zweite Schnittstelle (15) und die dritte Schnittstelle (20) als Funkschnittstellen und insbesondere als Bluetooth-Funkschnittstellen ausgebildet sind.

## Claims

1. Hybrid vehicle control device (18) for connecting to a vehicle bus (4), such as a CAN bus (19), FlexRay bus or byteflight bus, **characterised in that**
- the hybrid device (17) comprises a control device (1, 3) and an electronic device (16),
- wherein the control device (1) and the electronic device (16) are in a bi-directional communication link (22),
- wherein the control device (1) is connected to the vehicle bus (4),
- wherein the control device (1) forms a gateway for a vehicle-related application running on the electronic device (16),
- that a part of the functionality of the control device (1, 3) is transferred to the electronic device (16) which carries an application,
- wherein the electronic device (16) is configured as a mobile telephone,
- wherein a part of the original functions of the control device is realised by way of software within the application which can be installed as software on a piece of hardware of the electronic device (16),
- wherein on a first piece of hardware (5) of the control device (1, 3) lower layers (11 - 13) of a layer model (6) are implemented,
- wherein the implementation comprises a physical layer (13a), a data link layer (12a) and a network layer (11a) of the layer model (6), wherein the data link layer (12a) controls access to the physical layer and wherein the network layer (11a) is responsible for establishing a connection,
- wherein the electronic device (16) comprises a second piece of hardware (21),
- wherein on the freely programmable piece of hardware (21) of the electronic device (16) the first application (24) that is adjusted to the electronic device (16) and to the control device (1, 3) is installed, via which upper layers (25 - 28) of the layer model (6) are implemented,
- wherein in the hybrid device (17) a two-part control device (30), in particular a two-part ad hoc control device is formed by the connection of the upper layers (25 - 28) of the electronic device (16) to the lower layers (11 - 13, 11a - 13a) of the control device (1, 3), said connection being realised using the communication link (22),
- wherein the control device (1, 3) comprises a first interface (14) and a second interface (15),
- wherein the control device (1, 3) is connected to the vehicle bus (4) via the first interface (14),
- wherein the electronic device (16) comprises a third interface (20),
- wherein by means of the second and the third interface (15, 20) the bi-directional communication link (22) is between the control device (1, 3) and the electronic device (16),
- wherein the second interface (15) of the control device (1, 3) in particular comprising its own layer (23), in particular a data link layer (23a), is in a direct bi-directional communication link with the data link layer (12a) implemented on the first piece of hardware (5) of the control device (1, 3),
- wherein on the hardware of the electronic device (16) in particular an application layer (25a), a presentation layer (26a), a session layer (27a) and a transport layer (28a) are implemented via the application (24), and
- wherein the third interface (20) of the control device (16) in particular comprising its own layer (29), in particular a data link layer (29a), is in a direct bi-directional communication link with one of the layers implemented (25 - 28) on the second piece of hardware (21) of the electronic device (16), in particular with the transport layer (28a),
**characterised in that**
- direct communication is established between the electronic device (16) and the control device (1), which takes place in a language of the connected vehicle bus so that in the involved devices (1, 16) no translation of the received or sent data packets is required.

2. A hybrid device according to claim 1, **characterised in that** the electronic device (16) is configured as a mobile device (31) and in particular as a mobile electronic communication device (32).

3. A hybrid device (17) according to any one of claims 1 or 2, **characterised in that** the second interface (15) and the third interface (20) are configured as radio interfaces and in particular as Bluetooth radio interfaces.

## Revendications

1. Appareil de commande de véhicule hybride (18) pour raccordement à un bus de véhicule (4), comme par exemple un BUS CAN (19), un bus FlexRay ou un Bus ByteFlight, **caractérisé en ce que**
- l'appareil hybride (17) comprend un appareil de commande (1 ; 3) et un appareil électronique (16),
- l'appareil de commande (1) et l'appareil électronique (16) étant en liaison de communication bidirectionnelle (22),
- l'appareil de commande (1) étant raccordé au bus de véhicule (4),
- l'appareil de commande (1) formant une passerelle pour une application liée au véhicule exécutée sur l'appareil électronique (16),
- **en ce qu'**une partie de la fonctionnalité de l'appareil de commande (1 ; 3) est transférée vers l'autre appareil électronique (16), qui contient une application,
- l'appareil électronique (16) étant conçu sous la forme d'un téléphone mobile,
- la réalisation d'une partie des fonctions d'origine de l'appareil de commande s'effectuant selon la technique des logiciels dans le cadre de l'application pouvant être installée sur un matériel de l'appareil électronique (16) sous la forme d'un logiciel,
- des couches internes (11 - 13) d'une architecture en couches (6) étant implémentées sur un premier matériel (5) de l'appareil de commande (1 ; 3),
- l'implémentation comprenant une couche physique (13a), une couche de liaison de données (12a) et une couche de réseau (11a) de l'architecture en couches (6), la couche de liaison de données (12a) régissant l'accès au plan physique et la couche de réseau (11a) étant responsable de l'établissement de la connexion,
- l'appareil électronique (16) comprenant un second matériel (21),
- la première application (24) adaptée sur l'appareil de commande (1 ; 3) et sur l'appareil électronique (16) étant installée sur le matériel librement programmable (21) de l'appareil électronique (16), à travers laquelle les couches supérieures (25 - 28) de l'architecture en couches (6) sont implémentées,
- dans l'appareil hybride (17), par le biais de la liaison réalisée par la liaison de communication (22) des couches supérieures (25 - 28) de l'appareil électronique (16) avec les couches inférieures (11 - 13; 11a - 13a) de l'appareil de commande (1 ; 3), un appareil de commande en deux parties (30), notamment un appareil de commande ponctuel en deux parties, étant formé,
- l'appareil de commande (1 ; 3) comprenant une première interface (14) et une deuxième interface (15),
- l'appareil de commande (1 ; 3) étant raccordé au bus de véhicule (4) par le biais de la première interface (14),
- l'appareil électronique (16) comprenant une troisième interface (20),
- lors de l'utilisation de la deuxième et de la troisième interface (15, 20), la liaison de communication bidirectionnelle (22) s'effectuant entre l'appareil de commande (1 ; 3) et l'appareil électronique (16),
- la deuxième interface (15) de l'appareil de commande (1 ; 3) étant en liaison de communication directe bidirectionnelle, notamment avec une couche propre 23, en particulier une couche de liaison de données (23a) avec la couche de liaison de données (12a) implémentée sur le premier matériel (5) de l'appareil de commande (1 ; 3),
- une couche d'application (25a), une couche de présentation (26a), une couche de session (27a) et une couche de transport (28a) étant notamment implémentées sur le matériel de l'appareil électronique (16) par le biais de l'application (24) et
- la troisième interface (20) de l'appareil électronique (16) étant en liaison de communication directe bidirectionnelle, notamment avec une couche propre (29), en particulier une couche de liaison de données (29a) avec une couche (25 - 28) implémentée sur le deuxième matériel (21) de l'appareil électronique (16), en particulier la couche de transport (28a),
**caractérisé en ce**
- **qu'**une communication directe entre l'appareil électronique (16) et l'appareil de commande (1) est établie, qui s'effectue dans un langage du bus de véhicule raccordé, de sorte qu'aucune traduction des paquets de données envoyés ou reçus ne soit nécessaire dans les appareils participants (1 ; 16).

2. Appareil hybride selon la revendication 1, **caractérisé en ce que** l'appareil électronique (16) est conçu sous la forme d'un appareil électronique mobile (31) et notamment d'un appareil de communication électronique mobile (32).

3. Appareil hybride (17) selon une des revendications 1 ou 2, **caractérisé en ce que** la deuxième interface (15) et la troisième interface (20) sont conçues sous la forme d'interfaces radio et en particulier d'interfaces radio Bluetooth.
